Europäisches Patentamt

European Patent Office

Office européen des brevets

(11) Veröffentlichungsnummer: **0 118 675**
**A2**

(12) **EUROPÄISCHE PATENTANMELDUNG**

(21) Anmeldenummer: **84100480.7**

(22) Anmeldetag: **18.01.84**

(51) Int. Cl.³: **B 60 C 5/10**

(30) Priorität: **12.02.83 DE 3304923**

(43) Veröffentlichungstag der Anmeldung:
**19.09.84 Patentblatt 84/38**

(84) Benannte Vertragsstaaten:
**AT BE CH DE FR GB IT LI LU NL SE**

(71) Anmelder: **Continental Gummi-Werke Aktiengesellschaft**
**Königsworther Platz 1**
**D-3000 Hannover 1(DE)**

(72) Erfinder: **Giese, Fritz, Dipl.-Ing.**
**Leipziger Strasse 25**
**D-3540 Korbach(DE)**

(54) Schlauch für Luftbereifungen.

(57) Die Erfindung betrifft einen endlichen Schlauch für Luftbereifungen. Um diese aus Gummi oder ähnlichen Stoffen bestehenden Schläuche an ihren Enden dauerhaft abdichten und die bei der Herstellung des Schlauches erforderlichen Verfahrensschritte vereinfachen zu können, sind die an den Enden des Schlauchkörpers befindlichen Stirnflächen festhaftend mit einer Seitenfläche eines quer zum Schlauch verlaufenden Riegels verbunden.

*Fig. 2*

EP 0 118 675 A2

Croydon Printing Company Ltd.

·1

## Schlauch für Luftbereifungen

Die Erfindung betrifft einen endlichen Schlauch für Luftbereifungen, insbesondere an Fahrrädern oder anderen einspurigen Fahrzeugen.

Im Gegensatz zu ringförmig ausgeführten Schläuchen dieser Art ergibt sich bei endlichen Schläuchen der Vorteil, daß bei der Montage bzw. Demontage der Radkörper am Fahrzeugrahmen verbleiben kann.

Schwierigkeiten bereiten diese Schläuche im Hinblick auf die luftdicht abzuschließenden Endstücke des im übrigen durch Spritzen oder dergl. gefertigten Schlauchkörpers. Bei einer solchen Herstellung des Schlauchkörpers müssen sowohl die innenliegende Fläche als auch die außenliegende Fläche des Schlauches mit Talkum oder ähnlichen Mitteln behandelt werden, um ein Zusammenkleben der Schlauchwandungen zu vermeiden. Beabsichtigt man nun, die Endabschnitte dieser Schlauchkörper durch Zusammenkneifen und Zusammenvulkanisieren luftdicht zu verschließen, so ist es erforderlich, das vorgenannte Behandlungsmittel an der beabsichtigten Verbindungsstelle der Schlauchwandungen sorgsam zu entfernen. Abgesehen davon, daß dieser Arbeitsgang sehr sorgfältig ausgeführt werden muß, kann er im Regelfalle nicht maschinell ausgeführt werden, weil es sich dabei vorwiegend um die Innenflächen des Schlauchkörpers handelt.

Der Erfindung liegt im wesentlichen die Aufgabe zugrunde, den luftdichten Endabschluß des Schlauchkörpers so auszubilden, daß es nicht erforderlich ist, Talkum oder ähnliche Mittel zu entfernen, aber dennoch sichergestellt ist, daß eine gute, dauerhafte Verbindung entsteht.

Zur Lösung dieser Aufgabe sind erfindungsgemäß die am Schlauchkörper befindlichen Stirnflächen festhaftend mit einer Seitenfläche eines quer zum Schlauchkörper verlaufenden vollwandigen Riegels aus Gummi oder dergl. verbunden.

Somit wird der luftdichte Abschluß nicht durch Zusammenvulkanisieren der einander benachbarten Schlauchinnenflächen erreicht, sondern unter Verwendung eines kleinen riegelartigen Gummistückes, das an die Stirnfläche des Schlauchkörpers anvulkanisiert wird.

Es wird hierbei von der Überlegung ausgegangen, daß der Schlauchkörper auf Länge geschnitten werden muß, wobei frische, nicht mit Talkum oder dergl. bedeckte Stirnflächen entstehen. Diese frischen, unbehandelten Flächen bieten die Gewähr für eine gute Bindung durch Anvulkanisieren an einen quer zum Schlauchkörper verlaufenden Hilfskörper.

Weitere Einzelheiten der Erfindung werden anhand der Zeichnung erläutert, in der ein Ausführungsbeispiel der Erfindung dargestellt ist. Es zeigen:

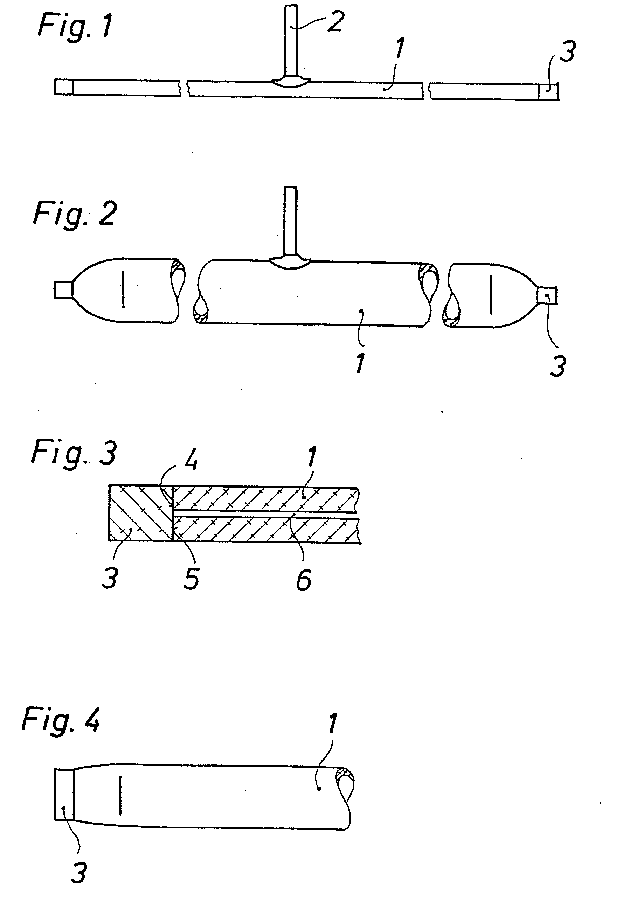

Fig. 1 einen endlichen Schlauch für eine Fahrradbereifung im nicht aufgeblasenen Zustand in der Seitenansicht,

Fig. 2 den Schlauch gemäß Fig. 1 im geblähten Zustand,

Fig. 3 einen Teillängsschnitt durch den Endabschnitt des Schlauches gemäß Fig. 1 und 2 und

Fig. 4 eine Teildraufsicht auf den Schlauch gemäß Fig. 3 im geblähten Zustand.

Der Schlauchkörper 1 ist in üblicher Weise mit einem Ventilanschluß 2 versehen. Er hat eine dem Radumfang entsprechende Länge.

Im Bereich der beiden Schlauchenden ist ein querverlaufender, im Querschnitt rechteckiger Riegel 3 aus Gummi bzw. aus dem Elastomer angeordnet, aus dem auch der Schlauchkörper 1 gefertigt ist. Die dem Schlauchkörper 1 zugekehrte Seitenfläche 4 des Riegels 3 ist festhaftend durch Vulkanisation mit der Stirnfläche 5 des Schlauchkörpers 1 verbunden. Dadurch wird der Hohlraum 6 des Schlauchkörpers 1 an beiden Enden luftdicht abgeschlossen.

Wie bereits ausgeführt, entstehen bei der Ablängung des Schlauchkörpers 1, also bei der Herstellung des Schlauches frische, unbedeckte Flächen in Form der Stirnflächen 5, die zu der festhaftenden Bindung an dem Riegel 3 ausgenutzt werden.

Anspruch:

Endlicher Schlauch für Luftbereifungen, insbesondere an Fahrrädern oder anderen einspurigen Fahrzeugen, dadurch gekennzeichnet, daß die an den Enden des Schlauchkörpers (1) befindlichen Stirnflächen (5) festhaftend mit einer Seitenfläche (4) eines quer zum Schlauchkörper (1) verlaufenden vollwandigen Riegels (3) verbunden sind.

Hannover, den 10. Februar 1983
83-6 P/D                        D/Fr

0118675

Fig. 1

Fig. 2

Fig. 3

Fig. 4